(19) Europäisches Patentamt / European Patent Office / Office européen des brevets

(11) **EP 2 341 120 A1**

(12) **EUROPEAN PATENT APPLICATION**

(43) Date of publication:
**06.07.2011 Bulletin 2011/27**

(51) Int Cl.:
*C10G 2/00* (2006.01) *B01J 37/02* (2006.01)

(21) Application number: **09180871.7**

(22) Date of filing: **29.12.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK SM TR**<br>Designated Extension States:<br>**AL BA RS** | (72) Inventor: **The designation of the inventor has not yet been filed** |
| (71) Applicant: **Shell Internationale Research Maatschappij B.V.**<br>**2596 HR The Hague (NL)** | (74) Representative: **Matthezing, Robert Maarten et al**<br>**Shell International B.V.**<br>**Intellectual Property Services**<br>**P.O. Box 384**<br>**2501 CJ The Hague (NL)** |

(54) **Coating method for structured catalysts**

(57) The invention relates to a method for applying a layer comprising a carrier material to a highly porous support, said method comprising the following steps: (a) applying a mixture comprising a liquid and a carrier material to a highly porous support; (b) removing some of the mixture from the porous support by means of blowing a gas through the support with carrier material; (c) drying and/or calcining the support.

EP 2 341 120 A1

**Description**

The present invention relates to a method for coating a support for a catalyst. It especially relates to a method for coating a structured catalyst support. The invention further relates to the catalyst made and the use of this catalyst.

As is explained in WO 2005/075065, Fischer-Tropsch processes are often used for the conversion of gaseous hydrocarbon feed stocks into liquid and/or solid hydrocarbons. The feed stock, e.g. natural gas, associated gas, coal-bed methane, residual (crude) oil fractions, coal and/or biomass is converted in a first step to a mixture of hydrogen and carbon monoxide, also known as synthesis gas or syngas. The synthesis gas is then converted in a second step over a suitable catalyst at elevated temperature and pressure into paraffinic compounds ranging from methane to high molecular weight molecules comprising up to 200 carbon atoms, or, under particular circumstances, more.

Numerous types of reactor systems have been developed for carrying out the Fischer-Tropsch reaction. Fischer-Tropsch reactor systems include fixed bed reactors, in particular multi-tubular fixed bed reactors, fluidized bed reactors, such as entrained fluidized bed reactors and fixed fluidized bed reactors, and slurry bed reactors, such as three-phase slurry bubble columns and ebullated bed reactors.

The Fischer-Tropsch reaction is very exothermic and temperature sensitive with the result that careful temperature control is required to maintain optimum operation conditions and desired hydrocarbon product selectivity. Bearing in mind the very high heat of reaction which characterizes the Fischer-Tropsch reaction, the heat transfer characteristics of a catalyst are important.

The current invention relates to a highly porous catalyst suitable for use in an exothermic reaction. Such a catalyst has very good heat transfer characteristics. The catalyst normally comprises a support and a catalyst material. The support has a highly porous structure. The catalyst material comprises a catalytically active metal and a carrier.

Application of a layer comprising carrier material to the highly porous support is often performed by a coating method, such as spray-coating or dip-coating. A problem with most coating methods is controlling the application of the coating.

It is thus desired to have an improved method for applying a layer comprising a carrier material to a highly porous support.

Accordingly, the present invention provides a method for applying a layer comprising a carrier material to a highly porous support, said method comprising the following steps:

    (a) applying a mixture comprising a liquid and a carrier material to a highly porous support;
    (b) removing some of the mixture from the porous support by means of blowing a gas through the support with carrier material;
    (c) drying and/or calcining the support.

A method according to the present invention has several advantages. With a method using gas blowing, an even layer comprising carrier material can be obtained. Further, the thickness of the layer comprising carrier material can be controlled.

The method of the present invention may be repeated several times, whereby a thin layer comprising carrier material is applied each time. This way a good and strongly adhered layer comprising a carrier material may be applied to the highly porous support.

When using a metal oxide as carrier material, such as titania, silica or alumina, each applied layer comprising carrier material may be dried and/or calcined before the next layer is applied.

A method according to the present invention in which gas is blown is highly advantageous as it is possible to apply an even layer comprising carrier material with a desired thickness in less coating steps as compared to a method in which a support with freshly applied mixture comprising a liquid and a carrier material is centrifuged to remove some of the mixture from the porous support.

When applying a mixture comprising a liquid and a carrier material to a highly porous support, any suitable application method may be used. For example, the mixture may be applied by means of dip-coating and/or spray-coating. Preferably the mixture is applied to the highly porous support in step (a) by means of dip-coating.

The liquid used in step (a) preferably is a liquid with which the carrier material can form a mixture rather than a solution. Most preferably it is possible to prepare a slurry from the liquid and carrier material. In a slurry, solid carrier particles are dispersed in the liquid. The slurry may be a suspension of solid carrier material in the liquid.

Examples of suitable liquids that can be used in step (a) are water and alcohol. Preferably the liquid used in step (a) is water.

The mixture comprising a liquid and a carrier material that is applied to a highly porous support in step (a) may comprise additional ingredients. For example, the mixture may comprise a catalytically active metal or precursor therefor. Additionally or alternatively, the mixture may comprise a promoter or precursor therefor. Additionally or alternatively, the mixture may comprise a dispersant. A suitable dispersant for a mixture comprising water and titania is, for example, an ammonium salt of a lactic acid titanate chelate. An example of a commercially available ammonium salt of a lactic acid titanate chelate is Tyzor® LA (ex DuPont) .

After application of the mixture comprising a liquid and a carrier material to the support in step (a), some of the mixture is removed from the porous support. This is performed by blowing a gas through the support in step (b). The gas may be any gas, preferably is an inert gas, such as nitrogen, or air. Most preferably the gas used is air.

Preferably the gas blown at elevated pressure through the support. Most preferably the gas is brought to an elevated pressure in a container, and then the gas is released from the container. This way a flow of gas can be blown through the support with carrier material at a high speed. By the force of the gas excess carrier material is removed.

In a highly preferred method, the highly porous support, to which a mixture comprising a liquid and a carrier material has been applied, is put in a container. Then gas is brought to an elevated pressure in the same container, and then the gas is released. Most preferably the porous structure with the mixture is placed at one side in the container, so that the major part of the gas at high pressure is at the other side within the container. In such an embodiment, the gas is then preferably released at the side of the container where the porous support is. That way the major part of the gas will pass through the porous support before leaving the container.

The container may be any suitable container, for example of vessel that can withstand pressurized gas. The gas is preferably brought to a pressure above 2.0 bar before it is released from the container. The gas is preferably brought to a pressure below 100 bar before it is released from the container, more preferably below 50 bar. The container preferably is able to contain at least 5 liter gas, more preferably at least 10 liter, most preferably at least 20 liter. The container preferably can contain up to 500 liter gas, more preferably up to 200 liter, most preferably up to 100 liter.

The container preferably comprises a fast-opening valve. Most preferably the container comprises a fast-opening valve of a sufficient size to be able to release almost all the gas from the container within the opening time of the fast-opening valve. The opening of the valve preferably is at least 1 mm, more preferably at least 1 cm. For example, the opening of the valve may be circular with a diameter of at least 1 mm, preferably at least 1 cm. The opening of the valve preferably is less than 1 m, more preferably less than 20 cm. For example, the opening of the valve may be circular with a diameter of less than 1 m, preferably less than 20 cm.

The temperature during step (a) and during step (b) can be any suitable temperature. Preferably, the temperature during these steps is not below the freezing point of the liquid. Preferably, the temperature during these steps is not above the boiling point of the liquid. Preferably the temperature during these steps is in the range of between 5 and 70 °C, more preferably between 20 and 60 °C.

If the support with mixture is dried, the temperature during drying in step (c) can be any suitable temperature. It may be performed at room temperature. Drying in step (c) may be performed under vacuum. Preferably the temperature during drying is in the range of between 70 and 150 °C, more preferably between 100 and 140 °C. If the support is calcined, the calcination temperature may be adjusted to the nature of the carrier material. Calcination in step (c) is preferably performed at a temperature in the range of between 250 to 750 °C, preferably between 270 to 570 °C.

The method of the current invention may be repeated until a sufficiently high amount of carrier material has been applied to the highly porous support.

After the method of the current invention, or after repeatedly performing the method of the current invention, a catalytically active metal or precursor therefor may be applied, for example by means of impregnation. Similarly, a promoter or precursor therefor may be applied, for example by means of impregnation. If a catalytically active metal or precursor therefor or a promoter or precursor therefor is present in the mixture used in step (a), it may not be necessary to apply it after the method of the current invention.

It was found that the mixture comprising liquid and carrier material that is applied in step (a) may be relatively viscous. When a mixture comprising water and titania is used in step (a) of a method according to the present invention, the mixture may, for example, have a Loss on Ignition (LOI) of about 70% to 80%.

Loss on Ignition (LOI) numbers provided in this specification have been determined as follows:

- measuring the weight of a sample;
- thermal treatment of the sample for 1 hour at 500 °C;
- measuring the weight of the sample;
- calculating the weight loss corresponding to

$$LOI \text{ in } \% = (P_O - P_1)/P_O$$

in which

$P_0$ =initial weight of the sample and

$P_1$ =weight of the sample after thermal treatment for 1 hour at 500 °C, and cooling to ambient temperature in an anhydrous enclosure.

During step (b) the excess slurry is removed by blowing a gas. By blowing a gas it proved to be easier to control the removal of excess material as compared to removal of excess material with a similar viscosity using centrifugation. It was found that one advantage of blowing of a gas in step (b) is that more carrier material can be kept in an even layer on the support as compared to a method in which centrifuging is used to remove some of the mixture comprising a liquid and a carrier material from the support. Hence, the method has to be repeated fewer times to obtain the required amount of carrier material on the support.

Using the method of the present invention, preferably at least 90 %, more preferably at least 95 %, most preferably at least 99 % of the surface of the highly porous support is covered with carrier material.

Using the method of the present invention, optionally after repeating the method, preferably a layer comprising carrier material on the highly porous support is obtained with an average thickness in the range of between 20 to 100 micrometer, more preferably between 25 to 80 micrometer, most preferably between 25 to 60 micrometer. The thickness of the layer comprising carrier material may be estimated by measuring the weight increase of the highly porous support after application and drying of the layer comprising carrier material, thereby using an estimation of the density of the layer comprising carrier material.

Additionally or alternatively, the average thickness of a layer comprising carrier material on a highly porous support can be estimated by measuring the volume of the support before and after application of the layer comprising carrier material. The volumes may be determined by putting the support, and after application and drying and/or calcining the support with a layer comprising carrier material, in a container with a certain volume, and then measuring the amount of liquid needed to fill the container.

Additionally or alternatively, the thickness and the quality of a layer comprising a carrier material on a highly porous support can be determined as follows. A coated and dried and/or calcined support may be embedded in a resin, and then cut. The cuts can be studied using a scanning electron microscope (SEM) or a transmission electron microscope (TEM) or computer aided tomography (CAT).

The highly porous support to which the layer comprising a carrier material is applied preferably has a size of at least 1 mm. Supports having a size of at least 1 mm are defined as supports having a longest internal straight length of at least 1 mm.

The highly porous substrates used in a method according to the present invention may be of regular or irregular shapes, or a mixture thereof. Such include cylinders, cubes, spheres, ovoids, and other shaped polygons.

In a preferred embodiment the highly porous substrates have a form or shape selected from the group consisting of gauze, honeycomb, monolith, sponge, mesh, webbing, foil construct and woven mat form, or any combination of these.

The highly porous substrates may be a combination of forms such as those listed above. For example, the highly porous substrates may be made up of honeycomb shaped material and have a circular outer shape. Another example is a cylinder made from woven mat.

The highly porous substrates may be made from any inert material capable of withstanding conditions within the reactor. The highly porous substrates may be made from refractory oxides, for example titania, silica, alumina. The highly porous substrates are preferably made from metals, for example stainless steel, iron or copper.

The surface of the highly porous support may be smooth or rough. Preferably the support is cleaned before the carrier material is applied. When the support is made from metal, the support is preferably degreased before the carrier material is applied, for example by washing it with a mixture of toluene and acetone.

Suitable highly porous substrates, to which the carrier material can be applied, can be prepared in-house or obtained commercially. An example of a producer of suitable highly porous substrates is the Fraunhofer-Institute for Manufacturing and Advanced Materials in Dresden, Germany. The Fraunhofer-Institute advertises and sells, for example, melt extracted metallic fibres, and highly porous fibre structures that can be cylindrically or spherically shaped. Another example of a producer of suitable porous bodies is Rhodius. Rhodius advertises and sells, for example, knitted wire meshes of various shapes, with various thicknesses and with various densities. Another example of a producer of suitable porous bodies is Fibretech.

The porosity within the highly porous substrates, i.e. the internal voidage of the highly porous substrates before application of the carrier material on the highly porous substrates, is within the range of between 50 and 95 volume%; preferably the internal voidage is more than 60 volume%, more preferably more than 70 volume%, even more preferably more than 80 volume%, and most preferably more than 90 volume%, calculated on the circumferential volume of the highly porous substrates. Before application of the carrier material on the highly porous substrates, the porosity within the highly porous substrates may be even up to 98 volume%, calculated on the circumferential volume of the highly porous substrates.

The current invention additionally relates to a highly porous catalyst suitable for use in an exothermic reaction. The current invention additionally relates to the use of such catalyst in a Fischer-Tropsch reaction. The catalyst comprises a highly porous support and a catalyst material. The support has a highly porous structure. The catalyst material comprises a carrier and a catalytically active metal.

The catalyst may be made using the method of the current invention. As mentioned above, the catalytically active metal or a precursor therefor may be applied together with the carrier material in step (a). Additionally or alternatively, the catalytically active metal may be applied after the method of the present invention, for example by impregnating the support plus carrier with a solution comprising the catalytically active metal or a precursor therefor.

A precursor of a catalytically active component can be made catalytically active by subjecting it to hydrogen or a hydrogen containing gas.

A catalyst is defined for this specification as an object that either is catalytically active, or that can be made catalytically active by subjecting it to hydrogen or a hydrogen containing gas. For example, metallic cobalt is catalytically active in a Fischer-Tropsch reaction. In case the catalyst particle comprises a cobalt compound, the cobalt compound can be converted to metallic cobalt by subjecting it to hydrogen or a hydrogen containing gas. Subjection to hydrogen or a hydrogen containing gas is sometimes referred to as reduction or activation.

When a catalyst is referred to as comprising a certain amount of catalytically active metal, reference is made to the amount of metal atoms in the catalyst which are catalytically active when in metallic form. A catalyst comprising a cobalt compound, for example, is thus considered as a catalyst having a certain amount of catalytically active cobalt atoms. A catalyst thus comprises a certain amount of catalytically active metal, regardless of its oxidation state.

The porosity of the catalyst, i.e. including the carrier material and the highly porous substrate, is at least 50 volume% and is preferably at least 65 volume%, more preferably around 85 volume%, calculated on the circumferential volume of the catalyst.

The external voidage of one or more catalysts according to the present invention, i.e. including the carrier material and the highly porous substrate(s), in *situ* in a reactor is in the range of between 5 and 60 volume%, preferably less than 40 volume%, more preferably about 20 volume%, calculated on the reactor volume outwith the circumferential volume(s) of the catalyst(s).

The porosity of the catalyst, in other words the open volumes within the catalyst, must be sufficient to facilitate efficient through-flow of reactants, while at the same time the specific surface area of each catalyst should be as large as possible to increase exposure of reactants to the catalyst material.

The carrier material may be applied to the highly porous substrates as a thin layer in a method according to the present invention. The carrier material layer is preferably sufficiently thin to avoid diffusional mass transport limitation (decrease of CO and/or hydrogen partial pressure and/or unfavorable change of the hydrogen/carbon monoxide-ratio within the catalyst layer) of the syngas components within the carrier material layer. The thickness of the carrier material layer is preferably increased up to the onset of mass transport limitation. There is no upper limit to the thickness of the carrier material layer onto the highly porous substrates other than the remaining voidage after application of the carrier material on the highly porous substrate for hydrodynamic reasons.

Preferably the carrier material is applied as a layer to the highly porous substrates, typically in a thickness of from about 1 to about 300 micrometer and preferably from about 5 to about 200 micrometer.

It is preferred that the carrier material fraction of the catalyst is at least about 1% by volume and preferably at least about 4% by volume (with reference to the volume of the catalyst), with a preferred maximum of 25% by volume.

General methods of preparing catalyst or materials are known in the art, see for example US 4409131, US 5783607, US 5502019, WO 0176734, CA 1166655, US 5863856 and US 5783604. These include preparation by co-precipitation and impregnation. Such processes could also include sudden temperature changing.

The catalyst may comprise one or more metals or metal oxides as promoters, more particularly one or more d-metals or d-metal oxides.

Preferably the catalyst is a Fischer-Tropsch catalyst. Fischer-Tropsch catalysts are known in the art, and typically include a Group 8-10 metal component, preferably cobalt, iron and/or ruthenium, more preferably cobalt.

References to "Groups" and the Periodic Table as used herein relate to the new IUPAC version of the Periodic Table of Elements such as that described in the 87th Edition of the Handbook of Chemistry and Physics (CRC Press).

Suitable metal oxide promoters may be selected from Groups 2-7 of the Periodic Table of Elements, or the actinides and lanthanides. In particular, oxides of magnesium, calcium, strontium, barium, scandium, yttrium, lanthanum, cerium, titanium, zirconium, hafnium, thorium, uranium, vanadium, chromium and manganese are most suitable promoters.

Suitable metal promoters may be selected from Groups 7-10 of the Periodic Table. Manganese, iron, rhenium and Group 8-10 noble metals are particularly suitable, with platinum and palladium being especially preferred.

Any promoter(s) is typically present in an amount of from 0.1 to 60 parts by weight per 100 parts by weight of carrier material. It will however be appreciated that the optimum amount of promoter(s) may vary for the respective elements which act as promoter(s).

Typically the carrier material is a porous inorganic oxide, preferably alumina, silica, titania, zirconia or mixtures thereof. The most preferred carrier material is titania. The carrier could be added onto the highly porous substrates prior to addition of the catalytically active metal, for example by impregnation. Additionally or alternatively, the catalytically active metal and carrier material could be admixed and then added to the highly porous substrates.

A suitable catalyst comprises cobalt as the catalytically active metal and zirconium as a promoter. Another suitable catalyst comprises cobalt as the catalytically active metal and manganese and/or vanadium as a promoter.

In one embodiment, the highly porous substrate used in a method according to the present invention has a size in the range of between 1 mm to 50 mm, preferably 1 mm to 30 mm.

In one embodiment, the highly porous substrate used in a method according to the present invention is larger than 50 mm, for example up to 500 mm, even up to 2m. Preferably the highly porous substrate has a size in the range of between 50 mm to 2 m, preferably 50 cm to 1 m.

When of sufficient size, the highly porous catalyst can be fixed in a reactor.

The catalyst according to the present invention can be used for other exothermic processes including hydrogenation, hydroformylation, alkanol synthesis, the preparation of aromatic urethanes using carbon monoxide, Kblbel-Engelhard synthesis, and polyolefin synthesis.

In a Fischer-Tropsch reaction, syngas is converted to hydrocarbons. The conversion products may be in the liquid phase, or partial liquid and partial gas phase under reactor operating conditions.

The Fischer-Tropsch reaction is preferably carried out at a temperature in the range from 125 to 400 °C, more preferably 175 to 300 °C, most preferably 200 to 260 °C. The pressure preferably ranges from 5 to 150 bar, more preferably from 20 to 80 bar. The gaseous hourly space velocity may vary within wide ranges and is typically in the range from 500 to 10000 Nl/l/h, preferably in the range from 1500 to 4000 Nl/l/h. The hydrogen to CO ratio of the feed as it is fed to the catalyst bed generally is in the range of 0.5:1 to 2:1.

Products of the Fischer-Tropsch synthesis may range from methane to heavy hydrocarbons. Preferably, the production of methane is minimised and a substantial portion of the hydrocarbons produced have a carbon chain length of a least 5 carbon atoms. Preferably, the amount of $C_5+$ hydrocarbons is at least 60% by weight of the total product, more preferably, at least 70% by weight, even more preferably, at least 80% by weight, most preferably at least 85% by weight. The CO conversion of the overall process is preferably at least 50%.

The present invention further relates to a Fischer-Tropsch process comprising the steps of:

(i) providing a Fischer-Tropsch reactor with a catalyst according to the invention;
(ii) supplying syngas to the catalyst;
(iii) removing Fischer-Tropsch product from the reactor.

The present invention is illustrated by the following example, without being limited thereto or thereby.

Example 1; Comparative examples

Highly porous metal supports with a size of 90 mm by 70 mm were dipped in a slurry comprising water, titania, and a dispersant. The LOI of the slurry was 71%. The supports were removed from the slurry.

Some of the slurry that was stuck to the support was removed by centrifugation or by spinning for 2 seconds. Centrifugation was performed using a centrifuge with a diameter of 50 cm. Spinning around the axis of the support was performed using a stirring rod or drill.

The support with titania was then dried at 80 °C for 1 hour and subsequently calcined at 535 °C for 30 minutes.

This application method was repeated until the support with titania comprised about 10 to 12 weight% titania, calculated on the total weight of the support with titania. The last calcination step was performed at 535 °C for 2 hours.

Example 2; Examples according to the invention

Highly porous metal supports with a size of 90 mm by 70 mm were dipped in a slurry comprising water, titania, and a dispersant. The LOI of the slurry was 75%. Then the supports were removed from the slurry.

Some of the slurry that was stuck to each support was removed by blowing air through the support in the following way. The support with titania was placed in a vessel with a contents of 32 liter. The support was fixated in its position at one side of the vessel. The pressure in the vessel was increased until an air pressure of 3 bar absolute was achieved. Then the air was released by opening a fast-opening valve with a diameter of 33 mm. Most of the air passed through the support before it left the vessel.

The coated support was then dried at 80 °C for 1 hour and subsequently calcined at 535 °C for 30 minutes.

This application method was repeated until the support with titania comprised about 9 to 11 weight% titania, calculated on the total weight of the support with titania. The last calcination step was performed at 535 °C for 2 hours.

Results

The number of repetitions and the total amount of coating obtained in Comparative Examples 1 are summarized in Table 1. The number of repetitions and the total amount of coating obtained in Examples 2 according to the invention are summarized in Table 2.

Table 1

| Comparative Examples | Rotations per minute | End volume% of titania | Number of repetitions of the application method |
|---|---|---|---|
| 1a | 2000 spinning around own axis | 12 | 5 |
| 1b | 866 (50 cm diameter centrifuge) | 10 | 6 |
| 1c | 1076 (50 cm diameter centrifuge) | 10 | 9 |

Table 2

| Examples acc. to invention | Air pressure before blowing through support | End volume% of titania | Number of repetitions of the application method |
|---|---|---|---|
| 2a | 3 bar | 11 | 3 |
| 2b | 3 bar | 9 | 2 |

All samples showed a relatively even titania layer on the support. From these results is clear that a coating of carrier material on a highly porous support can be applied in less process steps using the method of the present invention, while still an even coating layer is obtained.

**Claims**

1. A method for applying a layer comprising a carrier material to a highly porous support, said method comprising the following steps:

   (a) applying a mixture comprising a liquid and a carrier material to a highly porous support;
   (b) removing some of the mixture from the porous support by means of blowing a gas through the support with carrier material;
   (c) drying and/or calcining the support.

2. A method according to claim 1, **characterized in that** the liquid is water or alcohol.

3. A method according to claim 1 or 2, **characterized in that** the carrier material is a porous metal oxide, preferably titania, silica or alumina, most preferably titania

4. A method according to any one of the above claims, **characterized in that** the pressure of the gas before it is released to blow through the support with carrier material is in the range between 1.5 and 10 bar, preferably in the range of between 2 and 7 bar, more preferably between 2.5 and 5 bar.

5. A method according to any one of the above claims, **characterized in that** the gas is an inert gas or air.

6. Catalyst prepared according to any one of claims 1 to 5.

7. Catalyst prepared according to any one of claims 1 to 5 whereby the mixture used in step (a) additionally comprises a catalytically active metal or precursor therefor.

8. Use of a catalyst according to claim 6 or 7 as Fischer-Tropsch catalyst.

9. Fischer-Tropsch process comprising the steps of:

(i) providing a Fischer-Tropsch reactor with a catalyst according to claim 6 or 7;
(ii) supplying syngas to the catalyst;
(iii) removing Fischer-Tropsch product from the reactor.

# EP 2 341 120 A1

Europäisches Patentamt
European Patent Office
Office européen des brevets

## EUROPEAN SEARCH REPORT

Application Number

EP 09 18 0871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/040090 A1 (WANG YONG [US] ET AL) 24 February 2005 (2005-02-24) * paragraph [0078]; table 1 * ----- | 6-9 | INV. C10G2/00 B01J37/02 |
| X | US 4 039 482 A (HOYER WILLIAM A ET AL) 2 August 1977 (1977-08-02) * claim 3; example 2 * ----- | 1-5 | |
| X | EP 1 920 839 A1 (NGK INSULATORS LTD [JP]) 14 May 2008 (2008-05-14) * paragraphs [0115], [0116], [0119]; claim 1 * ----- | 1-5 | |
| X | US 2005/164879 A1 (CHEN SHAU-LIN F [US]) 28 July 2005 (2005-07-28) * example 3 * ----- | 1-5 | |
| X | WO 2008/006786 A2 (SHELL INT RESEARCH [NL]; CHETTOUF ABDERRAHMANE [NL]; NIESEN GERARDUS P) 17 January 2008 (2008-01-17) * page 25, lines 11-22; claims 5,7,12 * ----- | 6-9 | TECHNICAL FIELDS SEARCHED (IPC) |
| A | US 2008/200328 A1 (EBERLE HANS-JURGEN [DE] ET AL) 21 August 2008 (2008-08-21) * the whole document * ----- | 1-5 | C10G B01J |

The present search report has been drawn up for all claims

| Place of search | Date of completion of the search | Examiner |
|---|---|---|
| The Hague | 21 May 2010 | Mattheis, Chris |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 18 0871

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2010

| Patent document cited in search report | | Publication date | Patent family member(s) | | Publication date |
|---|---|---|---|---|---|
| US 2005040090 | A1 | 24-02-2005 | AU | 2002367020 A1 | 30-07-2003 |
| | | | CA | 2470025 A1 | 24-07-2003 |
| | | | EP | 1465836 A2 | 13-10-2004 |
| | | | WO | 03059813 A2 | 24-07-2003 |
| US 4039482 | A | 02-08-1977 | AU | 8518875 A | 31-03-1977 |
| | | | BE | 834693 A1 | 16-02-1976 |
| | | | BR | 7506888 A | 17-08-1976 |
| | | | CA | 1069106 A1 | 31-12-1979 |
| | | | DE | 2546489 A1 | 22-04-1976 |
| | | | ES | 441734 A1 | 01-04-1977 |
| | | | FR | 2288551 A1 | 21-05-1976 |
| | | | GB | 1515733 A | 28-06-1978 |
| | | | IN | 142815 A1 | 27-08-1977 |
| | | | IT | 1047679 B | 20-10-1980 |
| | | | JP | 870110 C | 13-07-1977 |
| | | | JP | 51048476 B | 21-12-1976 |
| | | | JP | 51079692 A | 12-07-1976 |
| | | | NL | 7512313 A | 23-04-1976 |
| | | | PL | 100189 B1 | 30-09-1978 |
| | | | SE | 420272 B | 28-09-1981 |
| | | | SE | 7511740 A | 22-04-1976 |
| | | | SU | 682109 A3 | 25-08-1979 |
| | | | US | 3948213 A | 06-04-1976 |
| | | | ZA | 7505970 A | 29-09-1976 |
| EP 1920839 | A1 | 14-05-2008 | WO | 2007026844 A1 | 08-03-2007 |
| | | | US | 2008125316 A1 | 29-05-2008 |
| US 2005164879 | A1 | 28-07-2005 | NONE | | |
| WO 2008006786 | A2 | 17-01-2008 | AR | 061824 A1 | 24-09-2008 |
| | | | AU | 2007274365 A1 | 17-01-2008 |
| | | | EP | 2038058 A2 | 25-03-2009 |
| | | | US | 2009312179 A1 | 17-12-2009 |
| | | | ZA | 200810502 A | 24-06-2009 |
| US 2008200328 | A1 | 21-08-2008 | CA | 2605289 A1 | 30-11-2006 |
| | | | DE | 102005024124 A1 | 30-11-2006 |
| | | | EP | 1885495 A2 | 13-02-2008 |
| | | | WO | 2006125649 A2 | 30-11-2006 |

EPO FORM P0459

For more details about this annex : see Official Journal of the European Patent Office, No. 12/82

**EP 2 341 120 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005075065 A
- US 4409131 A
- US 5783607 A
- US 5502019 A
- WO 0176734 A
- CA 1166655
- US 5863856 A
- US 5783604 A